# EUROPEAN PATENT SPECIFICATION

(11) **EP 1 132 340 B1**
(45) Date of publication and mention of the grant of the patent: **07.05.2003**
(21) Application number: 01300273.8
(22) Date of filing: 12.01.2001
(51) Int. Cl.: B67D 5/60, B67D 5/64

(54) **Pipework Connection System**
Verbindungssystem für Rohrleitungen
Système de raccords de tuyaux

(30) Priority: 05.02.2000 GB 0002658; 28.09.2000 GB 0023750
(43) Date of publication of application: 12.09.2001
(73) Proprietor: D.Berry & Co., (Pipe Fitting Supplies) Ltd, Birmingham B21 0AY (GB)
(72) Inventor: Berry, Martin Gerard, Stourbridge, West Midlands DY9 0GZ (GB)
(74) Representative: Pearce, Anthony Richmond

(56) References cited:
- EP-A- 0 543 741
- WO-A-90/04157
- GB-A- 2 175 037
- US-A- 5 246 044
- US-A- 5 257 652

## Description

This invention relates to a pipework connection system for connecting pipework to a storage tank, and is more particularly, though not exclusively, concerned with a pipework connection system for connecting an underground fuel storage tank in a fuel station to fuel dispensing pumps on the forecourt of the fuel station. Such a system is shown in GB-A-2175 037.

It is an object of the present invention to provide an improved system for connecting pipework to a storage tank which is easy to assemble and easy to adapt to a variety of installations.

According to the present invention, there is provided a pipework connection system for connecting a plurality of pipes to a storage tank, said system comprising:-
(i) housing which is adapted to be secured to a flange around a neck of the tank and which includes a base and side walls, the base having a plurality of apertures therethrough which, in use, communicate with the interior of the tank through the neck, and the side walls having a plurality of apertures therethrough; and
(ii) a plurality of connectors, each having (a) a first region which is adapted to be sealingly secured to the base around one of the apertures in the base, and (b) a second region which is adapted to be sealingly engaged with an inner surface of one of the side walls around one of the apertures in that side wall; and each connector having a spigot which is adapted to extend through said one of said apertures for connection with a respective one of the pipes.

Preferably, each connector comprises (a) a tank connector part including said first region, and (b) a pipe connector part including said second region and said spigot, said tank connector part and said pipe connector part having mutually engageable ends..

Preferably, the base of the housing is a base plate which is sealingly secured to a base flange around the side walls of the housing. In a convenient embodiment, the base flange is disposed under the base plate.

It is particularly preferred for the system to include an outer housing which is adapted to be secured to an upstand of the tank which surrounds and is spaced from the neck of the tank, said outer housing having side walls having holes therethrough or being marked to enable holes to be provided therein at a plurality of locations, each hole or marking being disposed opposite a respective aperture in one of the side walls of the first-mentioned housing (the inner housing). Such a double housing arrangement has the particular advantage that there is a reduced risk of pollution through seepage of fuel.

In a convenient embodiment, adapter means are provided to enable the pipework connection system to be fitted to an existing underground fuel storage tank having a flange containing regularly spaced apertures around its neck.

Embodiments of the present invention will now be described, by way of example, with reference to the accompanying drawings, in which:-
Fig. 1 is a schematic exploded perspective view of an example of a pipework connection system according to the present invention shown without an outer housing;
Fig. 2 is a schematic exploded perspective view of the system of Fig. 1 showing the outer housing;
Fig. 3 is a section showing the system in use; and
Fig. 4 is a schematic exploded perspective view of another example of a pipework connection system according to the present invention.

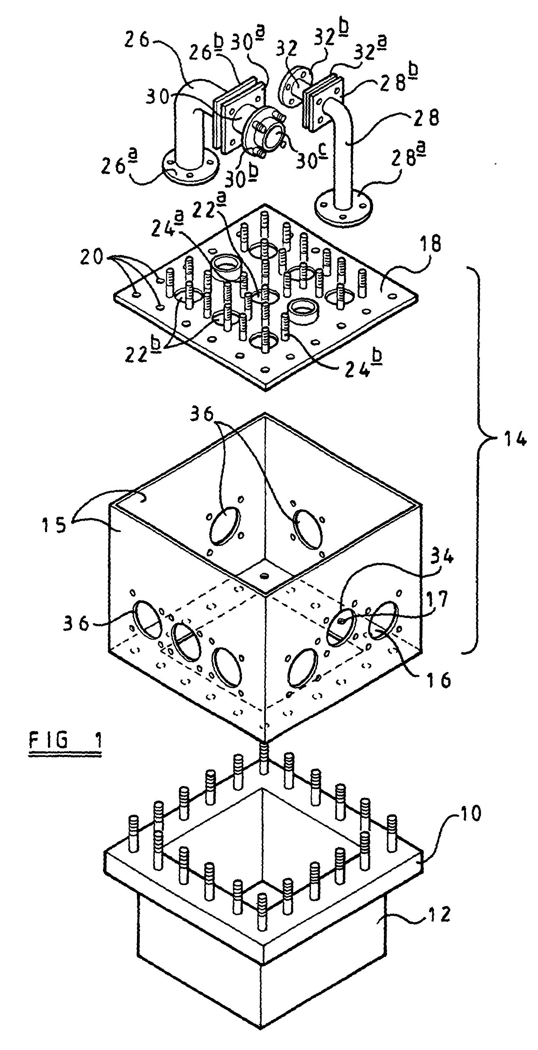

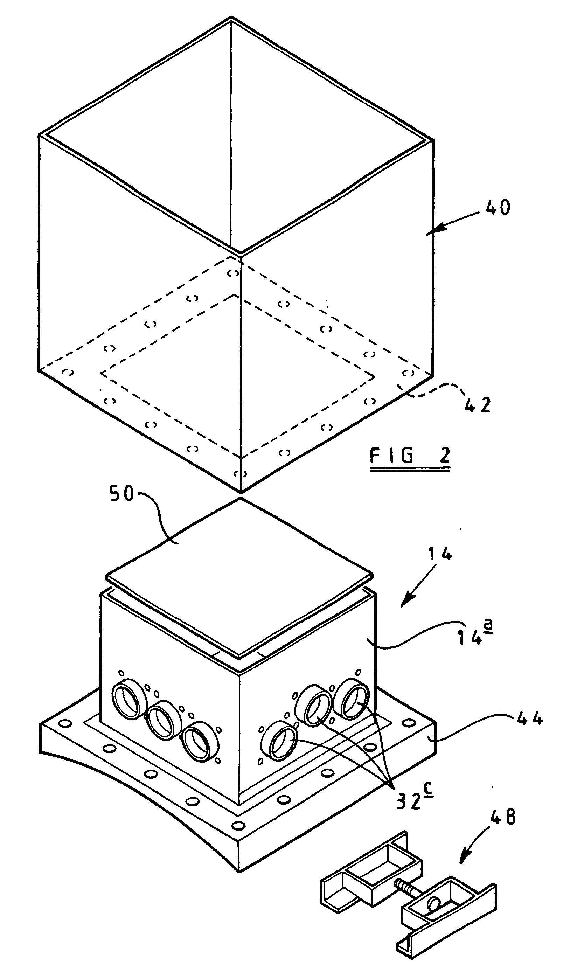

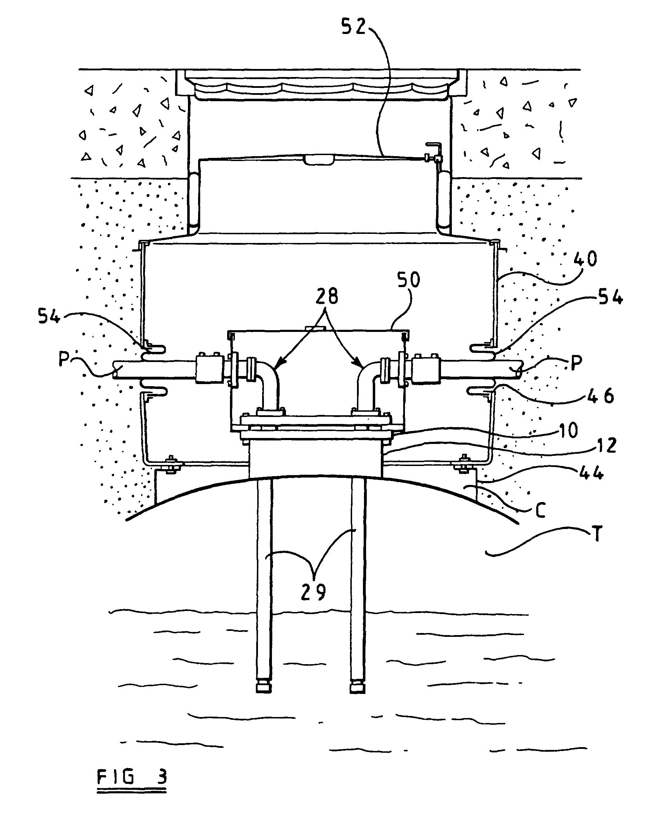

Referring now to Figs. 1 to 3 of the drawings, the illustrated pipework connection system is intended to be attached to a studded flange 10 around the neck 12 of an underground fuel tank T (see Fig. 3) installed at a fuel station and which is intended to store fuel to be supplied via pipes P to dispensing pumps (not shown) which may be arranged in a variety of ways on a fuel station forecourt. It will be appreciated that the particular arrangement of fuel dispensing pumps varies from fuel station to fuel station as does the siting of the underground fuel storage tank T. Thus, depending upon the particular site, the pipes P leading from the fuel dispensing pumps to the fuel tank T will vary in number and direction of extent.

The system provides a very convenient and effective way of completing the connections from the pipes P leading from the fuel dispensing pumps to the tank T which can be readily adapted to suit the particular site.

The system comprises an inner housing 14 which is square in plan view and which has four side walls 15 and a bottom, inwardly directed peripheral base flange 16 which has apertures 17 therein pitched to correspond to the pitching of the studs on the flange 10 of the tank T. The inner housing 14 further comprises a separate base plate 18 having peripheral mounting holes 20 therein arranged so as to coincide with the apertures in the base flange 16 and the studs on the flange 10. Thus, the inner housing 14 including the base plate 18 can be secured to the flange 10 using nuts (not shown) engaging with the studs extending from the flange 10. Sealing gaskets (not shown) are provided under the base flange 16 and between the latter and the base plate 18 to ensure that there is a good seal around the base of the housing 14.

The base plate 18 is provided with a central aperture 22a and a set of two rows of three outer apertures 22b therethrough which thus open into the interior of the underlying tank T. Associated with these apertures 22a and 22b are sets of four equi-angularly spaced upstanding studs 24a and 24b.

The system further includes a multiplicity of two-part connectors, each consisting of a tank connector part 26 or 28, and a pipe connector part 30 or 32. The number of connectors depends upon the requirements of the installation site. Tank connector part 26 forms part of a large connector through which fuel is supplied into the tank. Some of the other tank connector parts 28 forms parts of connectors through which fuel from the tank is drawn by suction through the pipe P into one of the fuel dispensing pumps on the forecourt. Another of the connector parts 28 may be used to form part of a vent system for the tank T.

The tank connector parts 26 and 28 are of elbow shape. The connector part 26 has an apertured flange 26a at one end which is adapted to engage over the studs 24a of the central aperture 22a. The connector part 26 can be located on the base plate 18 in either of two orientations in which a flange 26b on the opposite end can face either one of two opposite side walls 15.

In a similar way, each of the connector parts 28 has a lower flange 28a which can be engaged over the studs 24b of any one of the outer rows of apertures 22b. Each connector part 28 used for connecting to a pipe P leading to one of the fuel dispensing pumps has a downwardly extending pipe 29 (Fig. 3) whose lower end opens into the tank T.

Each pipe connector part 30 has an inner apertured flange 30a which is intended to be bolted to the flange 26b to secure the connector parts 26 and 30 together. Each pipe connector part 30 also has a studded flange 30b adapted to seal against the inner surface of any one of the side walls 15 around an aperture 30 therethrough (the aperture in only one of the side walls 15 is shown). A spigot 30c extends from the flange 30b through the aperture 34 for with a tank filler pipe P or with a vent pipe (not shown) depending upon site requirements. Nuts (not shown) are engaged with the free ends of the studs on the flange 30b which extend through appropriate holes drilled in the side wall 15 around the aperture 34 with a gasket being interposed between the flange 30b and the inner surface of the side wall 15 to effect sealing of the flange 30a with the side wall 15.

In a like manner, each of the pipe connector parts 32 has (i) an inner apertured flange 32a for engaging a respective one of the flanges 28b, (ii) an outer studded flange 32b adapted to seal against the inner surface of any one of the side walls 15 around an aperture 36 therethrough, and (iii) a spigot 32c extending through the same aperture 36. The spigots 30c and 32c are adapted to have a respective pipe sealed thereto, e.g. by a per se known heat-seal fitting.

The number, location and orientation of the pairs of connector parts 28 and 32 are chosen to suit the particular installation site. Any connector part 28 which is connected to one of the outer apertures 22b can be orientated so that its associated connector part 32 can be engaged with either of the two adjacent apertures 36 in the neigbouring pair of side walls 15. Any of the apertures 22a, 22b, 34 and 36 which are unused in a particular installation can be blanked off by blanking plates. Gaskets are provided for sealing the flanges of the connector parts 26, 28 , 30 and 32 against the base plate 18 and the side walls 15, respectively.

An outer housing 40 formed of glass reinforced plastics is provided so as to surround the inner housing 14 and has an apertured base flange 42 which can be secured to an upstand 44 of a tank chamber C surrounding the neck 12 of the tank. The pipes P leading to the pipe connection system described above extend through holes 46 which are drilled through the outer housing 40. These holes 46 may be pre-drilled or the outer housing 40 may be pre-marked with locations at which holes 46 can be provided so that the person installing the system can drill the outer housing 40 at the correct positions so as to align the drilled holes 46 with those apertures 34 and 36 which are to be used for that installation.

The system further comprises four tension brackets 48. Each bracket 48 is intended to extend between each pair of opposing side walls on the inner housing 14 and the outer housing 40 so as to span the gap between these walls and to increase the rigidity of the whole structure.

The system further includes a lid 50 on top of the inner housing 14 and a cover 52 extending over the top of the outer housing 40.

During installation, after the upstand 44 and the flange 10 have been thoroughly cleaned and cleared, the inner housing 14 is fitted in place onto the flange 10 complete with intervening gasket. Then the base plate 18 with underlying gasket is introduced into the remainder of the inner housing 14 and engaged over the studs which extend from the flange 10 and through the apertures in the base flange 16. Nuts are then used to secure the now completed inner housing 14 so that the base of the housing 14 is fully sealed against the flange 10. Then, the connector parts 30 and 32 are secured to the chosen apertures 34 and 36 by nuts engaging the studs extending from the flanges 30b and 32b. The tank connector parts 26 and 28 are then engaged over the studs 24a on the appropriate apertures 22a and 22b in an orientation in which the flanges 26b and 28b are aligned with the flanges 30a and 32a of the connector parts 30 and 32, respectively, which are then bolted together in mutually sealing relationship with appropriate gaskets or seals between them.

Following this, the outer housing 40 is drilled with the holes 46 so as to align with those apertures 34 and 36 to which the connector parts 30 and 32 have been connected, and the pipes are then engaged with the spigots 30c and 32c which project through the side walls 15 of the inner housing 14. The sealing of these pipes against the spigots 30c and 32c can be effected in a manner known per se, for example by heat sealing in the case where the pipes are formed of plastic. In accordance with standard procedure, the pipes are sealed with respect to the holes drilled in the outer housing 40 using bellows seals 54.

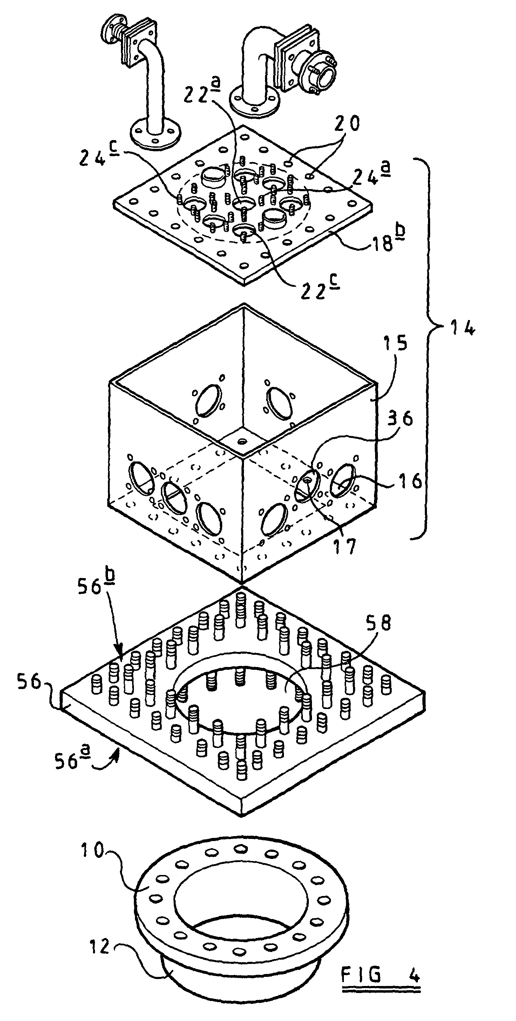

Referring now to Fig. 4 of the drawings, the system illustrated therein is similar to that of Figs. 1 to 3 and similar parts are accorded the same reference numerals. In this embodiment, there is a studded adapter plate 56 possessing a central circular aperture 58 of the same or smaller diameter than the tank opening. The adapter plate 56 has studs pitched on its underside 56a so as to correspond to the pitching of the apertures on the flange 10. An upper surface 56b of the adapter plate 56 possesses inner and outer sets of studs, the inner set being pitched so as to correspond to the apertures 17 in the inwardly directed peripheral base flange 16 of the inner housing 14, and the outer set being pitched so as to correspond to the apertures in the base flange 42 of the outer housing 40.

The adapter system also comprises a modified base plate 18b having peripheral mounting holes 20 arranged to coincide with the apertures 17 in the base flange 16 and the inner set of studs in the adapter plate 56. The adapter plate 56 is connected to the tank flange 10 and to the inner housing 14 and modified base plate 18b using nuts (not shown) engaging with the studs extending from the lower and upper surfaces of the adapter plate, 56a and 56b respectively. Sealing gaskets are provided between the flange 10 and the adapter plate 56, and between the adapter plate 56 and the inner housing 14 to ensure a good seal.

The modified base plate 18b is provided with a central aperture 22a and a set of two arcs of three outer apertures 22c therethrough which thus open into the interior of the underlying tank T. Associated with these apertures 22a and 22c are sets of four equi-angularly spaced upstanding studs 24a and 24c.

As with the embodiment of Figs. 1 to 3, the system further includes a multiplicity of two-part connectors 26,30 and 28,32. Due to the positioning of the outer apertures 22c in the modified base plate 18b, some of the tank connectors 28 may require adapters (not shown), which may be rigid or flexible, to allow them to be connected with the respective pipe connectors 32.

## Claims

1. A pipework connection system for connecting a plurality of pipes (P) to a storage tank (T), said system comprising:-
(i) a housing (14) which is adapted to be secured to a flange (10) around a neck (12) of the tank (T) and which includes a base (18) and side walls (15), the base (18) having a plurality of apertures (22a, 22b) therethrough which, in use, communicate with the interior of the tank (T) through the neck (12), and the side walls (15) having a plurality of apertures (34,36) therethrough; and
(ii) a plurality of connectors (26 and 30 or 28 and 32), each having (a) a first region (26a, 28a) which is adapted to be sealingly secured to the base (18) around one of the apertures (22a,22b) in the base (16), and (b) a second region (30b,32b) which is adapted to be sealingly engaged with an inner surface of one of the side walls (15) around one of the apertures (34,36) in that side wall (15); and each connector (26 and 30 or 28 and 32) having a spigot (30c or 32c) which is adapted to extend through said one of said apertures (34,36) for connection with a respective one of the pipes (P).

2. A pipework connection system as claimed in claim 1, wherein each connector comprises (a) a tank connector part (26 or 28) including said first region (26a or 28a), and (b) a pipe connector part (30 or 32) including said second region (30b or 32b) and said spigot (30c or 32c), said tank connector part (26 or 28) and said pipe connector part (30 or 32) having mutually engageable ends (26b, 30a or 28b, 32a).

3. A pipework connection system as claimed in claim 1 or 2, wherein the base (18) of the housing is a base plate (18) which is sealingly secured to a base flange (16) around the side walls (15) of the housing (14).

4. A pipework connection system as claimed in claim 3, wherein the base flange (16) is disposed under the base plate (18).

5. A pipework connection system as claimed in any preceding claim, further including an outer housing (40) which is adapted to be secured to an upstand (44) of the tank which surrounds and is spaced from the neck (12) of the tank, said outer housing (44) having side walls having holes therethrough or being marked to enable holes to be provided therein at a plurality of locations, each hole or marking being disposed opposite a respective aperture (34,36) in one of the side walls (15) of the first-mentioned housing (14).

6. A pipework connection system as claimed in any preceding claim, further including adapter means to enable the pipework connection system to be fitted to an underground fuel storage tank having a flange containing regularly spaced apertures around its neck.

## Patentansprüche

1. Verbindungssystem für Rohrleitungen zum Verbinden einer großen Anzahl von Rohren (P) an einen Speichertank (T), wobei das System umfasst:
(i) ein Gehäuse (14), das so angepasst ist, dass es an einem um einen Hals (12) des Tanks (T) herum verlaufenden Flansch (10) befestigt werden kann, und das einen Boden (18) und Seitenwände (15) umfasst, wobei der Boden (18) eine große Anzahl von Öffnungen (22a, 22b) durch denselben hindurch besitzt, welche im Betriebseinsatz mit dem Innern des Tanks (T) durch den Hals (12) hindurch in Verbindung stehen, und wobei die Seitenwände (15) eine große Anzahl von Öffnungen (34, 36) durch dieselben hindurch besitzen; und
(ii) eine große Anzahl von Verbindungsstücken (26 und 30 oder 28 und 32), von denen ein jedes (a) einen ersten Bereich (26a, 28a) aufweist, der so angepasst ist, dass er abgedichtet an dem Boden (18) um eine der Öffnungen (22a, 22b) in dem Boden (16) herum befestigt werden kann, und (b) einen zweiten Bereich (30b, 32b) aufweist, der so angepasst ist, dass er mit einer inneren Oberfläche von einer der Seitenwände (15) abgedichtet um eine der Öffnungen (34, 36) in dieser Seitenwand (15) herum in Eingriff gebracht werden kann; und ein jedes Verbindungsstück (26 und 30 oder 28 und 32) besitzt einen Zapfen (30c oder 32c), der so angepasst ist, dass er sich durch die eine dieser Öffnungen (34, 36) hindurch erstreckt, zum Verbinden mit je einem unter den Rohren (P).

2. Verbindungssystem für Rohrleitungen gemäss Anspruch 1, bei dem ein jedes Verbindungsstück aufweist; (a) einen Tankverbindungsteil (26 oder 28), der jenen ersten Bereich (26a oder 28a) mit einschließt, und (b) einen Rohrverbindungsteil (30 oder 32), der jenen zweiten Bereich (30b oder 32b) und jenen Zapfen (30c oder 32c) mit einschließt, wobei jener Tankverbindungsteil (26 oder 28) und jener Rohrverbindungsteil (30 oder 32) Enden (26b, 30a oder 28b, 32a) aufweisen, die gegenseitig ineinander in Eingriff gebracht werden können.

3. Verbindungssystem für Rohrleitungen gemäss Anspruch 1 oder 2, bei dem der Boden (18) des Gehäuses eine Bodenplatte (18) ist, die an einem Bodenflansch (16) um die Seitenwände (15) des Gehäuses(14) herum abgedichtet befestigt ist.

4. Verbindungssystem für Rohrleitungen gemäss Anspruch 3, bei dem der Bodenflansch (16) unter der Bodenplatte (18) angeordnet ist.

5. Verbindungssystem für Rohrleitungen gemäss irgendeinem vorhergehenden Anspruch, das weiterhin ein äußeres Gehäuse (40) mit einschließt, das so angepasst ist, dass es an einem Überstand (44) des Tanks befestigt werden kann, welcher den Hals (12) des Tanks umgibt und räumlich von dem Hals des Tanks entfernt angeordnet ist, wobei das äußere Gehäuse (40) Seitenwände mit Löchern durch dasselbe hindurch aufweist oder so markiert ist, um es zu ermöglichen darin Löcher an einer großen Zahl von Stellen einzurichten, wobei ein jedes Loch oder eine jede Markierung gegenüber einer jeweiligen Öffnung (34, 36) in einer der Seitenwände (15) des zuerst erwähnten Gehäuses (14) angeordnet ist.

6. Verbindungssystem für Rohrleitungen gemäss irgendeinem vorhergehenden Anspruch, das weiterhin ein Anpassungsmittel mit einschließt, um das Verbindungssystem für Rohrleitungen in die Lage zu versetzen, an einen unterirdischen Brennstoffspeichertank angepasst zu werden, der einen Flansch aufweist, welcher regelmäßig von einander entfernt angeordnete Öffnungen um seinen Hals herum besitzt.

## Revendications

1. Système de raccordement de tuyaux destine à raccorder plusieurs tuyaux (P) à un réservoir de stockage (T, ledit système comprenant:
(i) un boîtier (14) destiné à être fixé à une bride (10) entourant le col (12) du réservoir (T) et englobant une base (18) et des parois latérales (15), la base (18) comportant plusieurs ouvertures (22a, 22b) la traversant, communiquant en service avec l'intérieur du réservoir (T) par l'intermédiaire du col (12), les parois latérales (15) comportant plusieurs ouvertures (34, 36) les traversant ; et
(ii) plusieurs raccords (26 et 30 ou 28 et 32), comportant chacun (a) une première région (26a, 28a) destinée à être fixée de manière étanche sur la base (18) autour de l'une des ouvertures (22a, 22b) dans la base (16), et (b) une deuxième région (30b, 32b) destinée à être engagée de manière étanche dans une surface interne de l'une des parois latérales (15) autour de l'une des ouvertures (34, 36) dans la paroi latérale (15) ; chaque raccord (26 et 30 ou 28 et 32) comportant un embout (30c ou 32c) destiné à s'étendre à travers ladite une ouverture desdites ouvertures (34, 36) en vue du raccordement avec un des tuyaux respectifs (P).

2. Système de raccordement de tuyaux selon la revendication 1, dans lequel chaque raccord comprend (a) une partie de raccord du réservoir (26 ou 28) englobant ladite première région (26a ou 28a) et (b) un élément de raccord du tuyau (30 ou 32) englobant ladite deuxième région (30b ou 32b) et ledit embout (30c ou 32c), ledit élément de raccord du réservoir (26 ou 28) et ledit élément de raccord du tuyau (30 ou 32) comportant des extrémités à engagement mutuel (28b, 30a ou 28b, 32a).

3. Système de raccordement de tuyaux selon les revendications 1 ou 2, dans lequel la base (18) du boîtier est constituée par une plaque de base (18) fixée de manière étanche sur une bride de base (16) entourant les parois latérales (15) du boîtier (14).

4. Système de raccordement de tuyaux selon la revendication 3, dans lequel la bride de base (16) est agencée au-dessous de la plaque de base (18).

5. Système de raccordement de tuyaux selon l'une quelconque des revendications précédentes, englobant en outre un boîtier externe (40) destiné à être fixé à un prolongement (44) du réservoir entourant le col (12) du réservoir et espacé de celui-ci, ledit boîtier externe (40) comportant des parois latérales comportant des trous le traversant ou étant marqué de sorte à permettre la formation de trous au niveau de plusieurs emplacements, chaque trou ou marquage étant agencé en un point opposé à une ouverture respective (34, 36) dans une des parois latérales (15) du premier boîtier (14).

6. Système de raccordement de tuyaux selon l'une quelconque des revendications précédentes, englobant en outre un moyen d'adaptation permettant l'ajustement du système de raccordement de tuyaux sur un réservoir de stockage de carburant souterrain comportant une bride contenant des ouvertures espacées de manière régulière autour de son col.
